# EUROPEAN PATENT APPLICATION

(11) **EP 1 076 436 A2**
(43) Date of publication of application: **14.02.2001**
(21) Application number: 00650091.2
(22) Date of filing: 01.08.2000
(51) Int. Cl.: H04L 12/18, H04Q 3/66

(54) **Route injection into a multicast routing table**

(30) Priority: 10.08.1999 US 371694
(71) Applicant: Nortel Networks Limited, Montreal, Quebec H2Y 3Y4 (CA)
(72) Inventor: Doong, Janet, Chelmsford, Massachusetts 01824 (US); Dobbu, Venkateswara R., Lowell, Massachusetts 01851 (US)
(74) Representative: Boyce, Conor

(57) **Abstract**

A method transmits multicast datagrams. The method includes searching for a route entry for a source network in a first routing table and returning a signal for a match in response to finding a route entry for the source network in the first routing table of a multicast router. The method injects a route entry for the source network in a multicast routing table of the multicast router in response to a signal for a match.

## Description

### BACKGROUND

This invention relates to multicast routing.

Some routers use a distance vector routing protocol (DVRP) to determine how to route datagrams. In DVRP, routers maintain unicast routing tables (URT's) having entries for various source network addresses. The entries of the URT provide data on a best route between the DVRP router and various addresses, e.g., source networks. The data includes a metric, e.g., a cost or delay, and an interface of the DVRP router associated with the best route.

DVRP routers regularly transmit routing table data to neighboring DVRP routers. The DVRP routers use routing table data from neighbors and values of metrics to neighbors to evaluate the metrics appearing in their own URT's. URT's list best routes in light of metrics of routes from neighboring DVRP routers.

A network may perform multicast routing in which a host can transmit datagram traffic to a group of other hosts. Multicast datagrams carry multicast group addresses, which function like radio channels. Hosts tune into multicast traffic by joining the associated multicast group address.

Some multicast routers can support the distance vector multicast routing protocol (DVMRP). The DVMRP routers form a subset of a network. Communications between DVMRP routers proceeds through either direct connections or tunnels. Some multicast routers use a DVMRP routing table to determine routing across the subnetwork.

A DVMRP routing table provides a metric for transmitting multicast datagrams between source network addresses and the DVMRP router associated with the table. DVMRP routers regularly transmit DVMRP multicast routing table data to neighboring DVMRP routers. The DVMRP routers update their own DVMRP multicast routing tables based on the DVMRP multicast routing table data of neighboring DVMRP routers and the metric between the routers and neighboring routers.

### SUMMARY

In a first aspect, the invention provides a method of transmitting multicast datagrams. The method includes searching for a route entry for a source network in a first routing table and returning a signal for a match in response to finding a route entry for the source network in the first routing table of a multicast router. The method injects a route entry for the source network in a multicast routing table of the multicast router in response to a signal for a match.

In a second aspect, the invention provides a method of transmitting multicast datagrams. The method includes determining whether a router has a route to a selected address. The method injects a route entry for the selected address in a multicast routing table of the router in response to determining that the router has a route to the selected address.

In a third aspect, the invention provides a computer program product enabling an operator to configure a router to transmit multicast datagrams. The computer program product includes a program residing on a computer readable medium. The program includes executable instructions to cause a processor to perform one of the above-described methods.

In a fourth aspect, the invention provides a network. The network includes a routing device and a plurality of multicast routers connected to transmit multicast datagrams according to a first routing protocol. The routing device is connected to one of the multicast routers via an interface for a second routing protocol. The one of the multicast routers is configured to multicast datagrams received from the routing device to the other multicast routers.

In a fifth aspect the invention provides an apparatus. The apparatus includes a multicast router having a routing table for routing multicast datagrams according to a multicast routing protocol. The routing table has an entry for a route through a routing device communicating with the multicast router via a second and different routing protocol.

In a sixth aspect, the invention provides a multicast router. The multicast router has first and second interfaces adapted to support different routing protocols. The multicast router also includes means for searching for a route entry for a source network in a first routing table and injecting a route entry for the source network in a multicast routing table of the same router. The means for searching and injecting injects the entry in the second routing table in response to finding a route entry for the source network in the first routing table.

### BRIEF DESCRIPTION OF THE DRAWINGS

Other objects, features, and advantages of the invention will be apparent from the following description, taken together with the drawings in which:
FIG. 1 is a block diagram showing a portion of a network providing a multicast router having both unicast and multicast routing tables;
FIG. 2 shows the multicast routing table of the router of FIG. 1;
FIG. 3 shows the unicast routing table of the router of FIG. 1;
FIG. 4 is a flow chart showing a process for injecting routes from a unicast routing table into multicast router tables of the routers of FIG. 1;
FIG. 5 shows a portion of a network in which a multicast router connects two portions of the network using different multicast routing protocols; and
FIG. 6 is a flow chart showing a process for transmitting multicast datagrams to a network with a different routing protocol using the multicast router of FIG. 5.

### DESCRIPTION

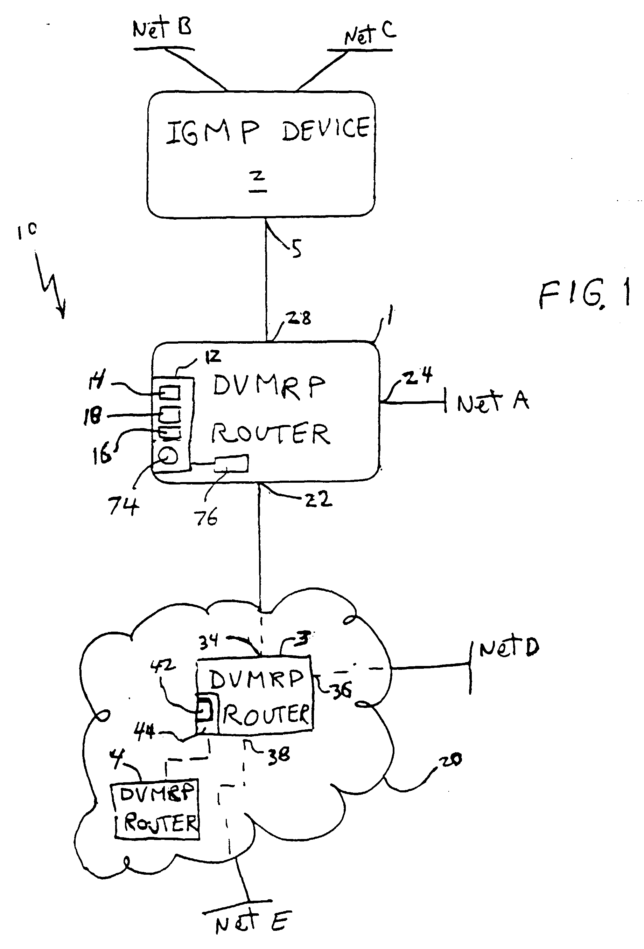

Referring to FIG. 1, a portion of a network 10 includes a DVMRP router 1. The DVMRP router 1 has a data storage device 12, which includes a computer readable medium, e.g., a read only memory (ROM), a random access memory (RAM), a magnetic disk, or an optical disk. The data storage device 12 stores a unicast routing table (URT) 14, a multicast routing tables 16 and policy rules 18, i.e., an executable software process. The unicast and multicast routing tables 14, 16 support routing of datagrams according to a unicast routing protocol and the DVMRP routing protocol, respectively. The policy rules 18 provide a programmable bit mask, which can be used to find entries for routes in the URT 14 based on selected source network addresses, i.e., selected address bit patterns.

The DVMRP router 1 connects to several different networks. A DVMRP network 20 connects to a DVMRP interface 22 of the DVMRP router 1 via either a direct connection or a tunnel. A local area network A connects locally or directly to a DVMRP interface 24 of the DVMRP router 1. An IGMP routing device 2 connects through a non-DVMRP interface 5 directly to an interface 28 of the DVMRP router 1. The IGMP routing device 2 may be an IGMP relay, router or a unicast-dependent multicast protocol router that supports communications with the DVMRP router 1. The IGMP device 2 connects to other networks B, C.

The DVMRP network 20 includes DVMRP router 3, which has a DVMRP interface 34 connected to the neighboring DVMRP router 1 either directly or via a tunnel. The DVMRP router 3 connects directly to networks D, E through interfaces 36, 38 and connects directly or via a tunnel to a neighbor DVMRP router 4. The DVMRP router 3 has a DVMRP multicast routing table 42 located in a data storage device 44, e.g., a ROM, RAM, magnetic disk, or an optical disk.

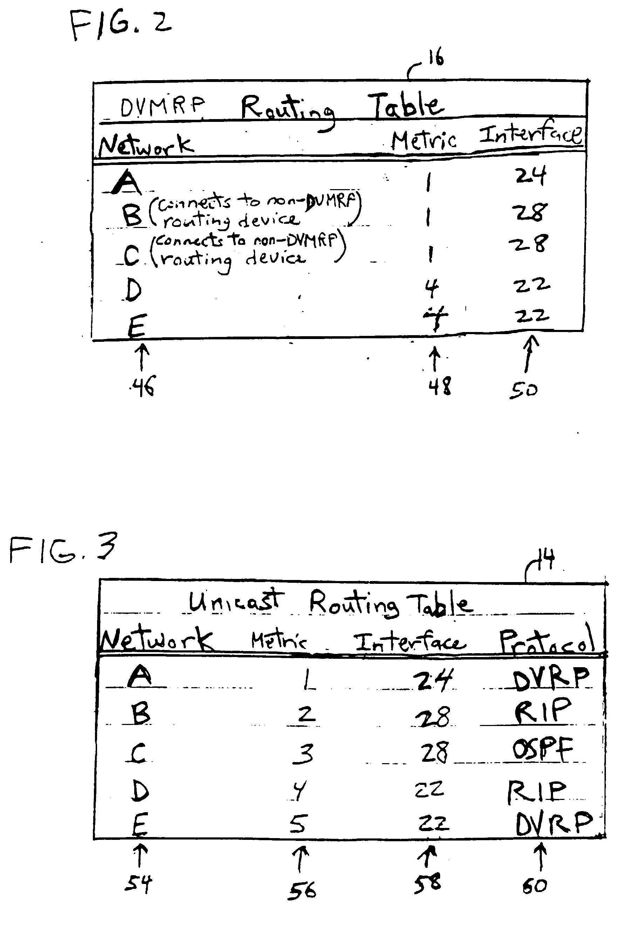

Referring to FIG. 2, the DVMRP multicast routing table 16 of the DVMRP router 1 is shown. The DVMRP multicast routing table 16 has entries for source network addresses 46. Each entry provides a metric 48, e.g., a five bit number, and a routing interface 50 which in combination provide a best multicast route between the associated source network address and the DVMRP router 1. The metric may be a number of hops, a delay, or a cost. The routing interface 50 of the DVMRP router 1 may be identified by Internet Protocol (IP) number.

The DVMRP multicast routing table 16 has entries for the source networks connecting to any of the DVMRP routers 1, 3, 4. Some source networks connect directly to one of the DVMRP routers 1, 3, 4 without intervening routing devices. For example, the network A connects directly to DVMRP router 1 and appears in the DVMRP multicast routing table 16 with the lowest value for the metric, i.e., one hop. Some source network addresses connect indirectly to one of the DVMRP routers 1, 3, 4 through an intervening non-DVMRP routing device. For example, the networks B and C connect to the non-DVMRP routing device 2, which connects to the DVMRP router 1 through a non-DVMRP interface 28. Entries for these indirectly connected networks have the same metric in the DVMRP multicast routing table 16 as entries for networks directly connected to the DVMRP router 1, i.e., one hop.

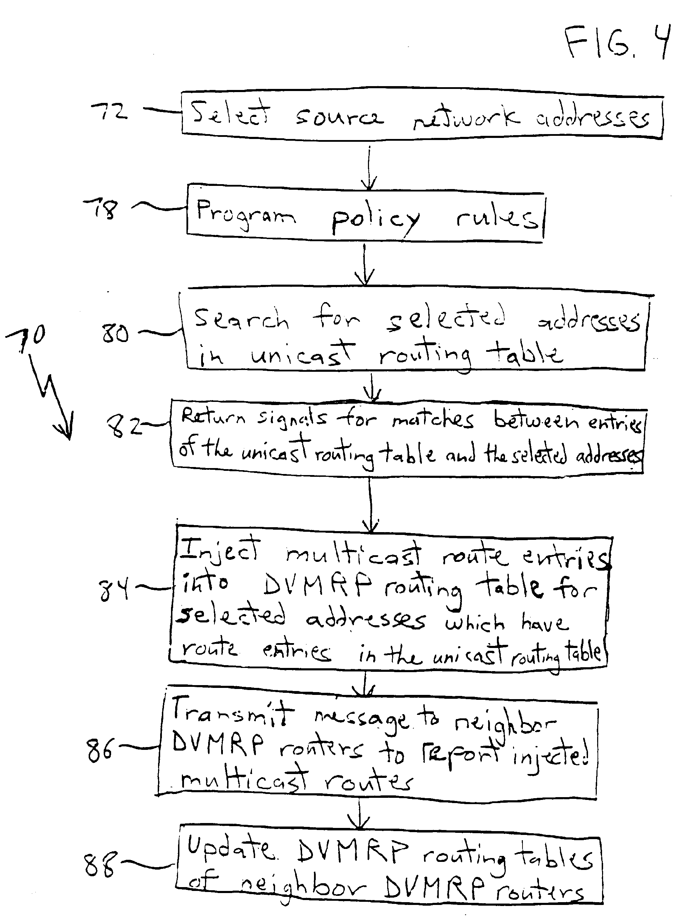

Referring to FIG. 3, the URT 14 of the DVMRP router 1 is shown. The unicast routing table 12 also has entries for various source networks 54. The entries indicate a metric 56 and routing interface 58, e.g., an interface IP address, which in combination provide a best route for unicast datagrams between the DVMRP router and the source network 54 for the entry. The unicast routing table 12 also identifies the routing protocol 60 on the routing interfaces 58.

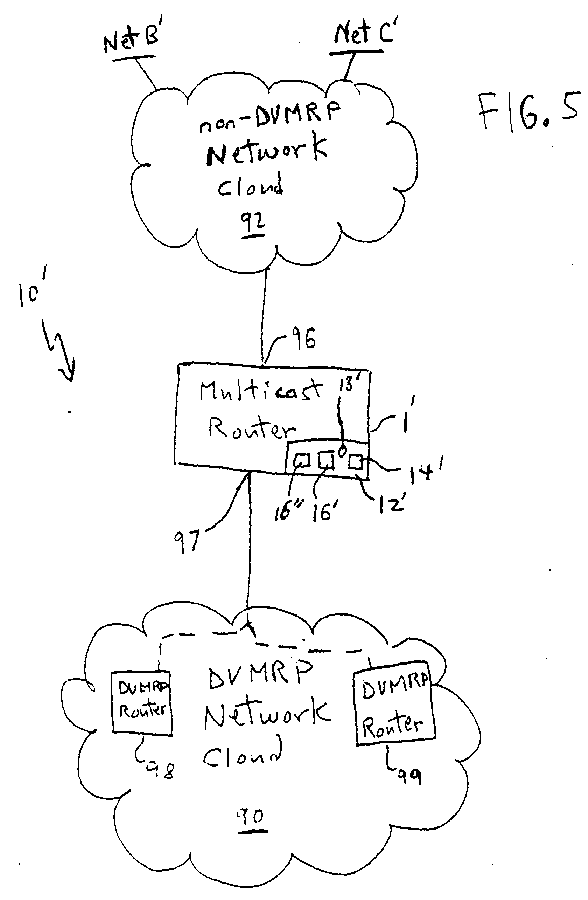

Referring to FIG. 4, a process 70 for propagating routes from the URT 14 to DVMRP routers 1, 3, 4 is shown. An operator selects 72 one or more source network addresses, e.g., a range of source network addresses.

In some embodiments, the operator is a software process 74 stored on the data storage device 12 of FIG. 1. The software process 74 for the operator regularly executes on a microprocessor 76 of the DVMRP router 1 to automatically perform the process 70.

In other embodiments, the operator is a human (not shown), e.g., a system administrator. The human operator manually performs the process 70, e.g., to correct multicast routing problems.

The operator programs the policy rules 18 to search 78 for route entries in the URT 14 that corresponding to the selected source network addresses and other search criteria (see below). The policy rules 18 search 80 the URT 14 for the selected source addresses. The policy rules return 82 signals for matches in response to finding matches between route entries of the URT 14 and the selected source network addresses. The signals for the matches identify which of the selected network addresses have matching entries in the URT 14.

The operator may program the policy rules 18 to limit searches for matches to route entries satisfying selected criteria. For example, the operator can program the policy rules 18 to search for routes through a selected interface or through an interface supporting a selected protocol. The operator may also program the policy rules 18 to search for route entries for source networks absent from the DVMRP multicast routing table 16.

In response matches between entries of the URT 14 and one or more of the selected source networks, the operator injects 84 multicast route entries in the DVMRP multicast routing table 16. The newly injected multicast route entries have the same source network and router interface identifier as those route entries of the URT 14 found by the policy rules 18. The operator sets a default value for the metric 48 of each injected multicast route entry 46. The default values may differ from the metric of the unicast route to the same source network, e.g., the metrics 56 of FIG. 3. The default value is the metric for a source network that is directly or locally connected to the DVMRP router. In table 16, the default value is one, e.g., the metric for network A which connects locally to DVMRP router 1 is one.

The DVMRP router 1 transmits 86 a message to its neighboring DVMRP routers, e.g., the router 3, to report the new multicast route entries in the DVMRP multicast routing table 16. The message reports new multicast routes injected into the DVMRP multicast routing table 16 from the same router's URT 14. The neighboring DVMRP routers update 88 their own DVMRP multicast routing tables, e.g., the table 42 of FIG. 1, based on the message reporting new multicast route entries.

The neighboring routers can add new routes to their own DVMRP multicast routing tables that incorporate the multicast route entry injected into the DVMRP multicast routing table 16. To be added, the new routes using the injected multicast routes must be better routes to the associated source addresses than existing multicast routes. For example, the injected routes provide better routes if other multicast routes do not exist for the same source addresses. Thus, multicast routes to source addresses not previously present in the neighbor's DVMRP multicast routing table 42 may be inserted by the update.

The neighboring DVMRP routers transmit messages reporting updates to their DVMRP multicast routing tables to their own neighboring DVMRP routers. For example, the DVMRP router 3 transmits a message to DVMRP router 4 of FIG. 1. The messages reporting these updates propagate the injected multicast routes from the DVMRP multicast routing table 16 into the DVMRP multicast routing tables of the other DVMRP routers, e.g., the DVMRP router 4.

A DVMRP router does not forward multicast datagrams received from a source network unless the source network has an entry in the DVMRP multicast routing table of the DVMRP router. The DVMRP router also discards multicast messages from routers not supporting DVMRP. Thus, a source network datagram does not multicast through the DVMRP router through which the network connects only via a non-DVMRP router unless the DVMRP router injects routes from a non-DVMRP routing table into the DVMRP routing table.

Referring again to FIG. 1, source networks B and C only connect to the DVMRP router 1 through the non-DVMRP routing device 2. Thus, the networks B and C do not multicast through the DVMRP router 1 automatically. But, an operator can use the process 70, shown in FIG. 4, to create multicast routes for the networks B and C in the DVMRP multicast routing table 16. After creating these routes, the networks B and C can multicast through the DVMRP router 1.

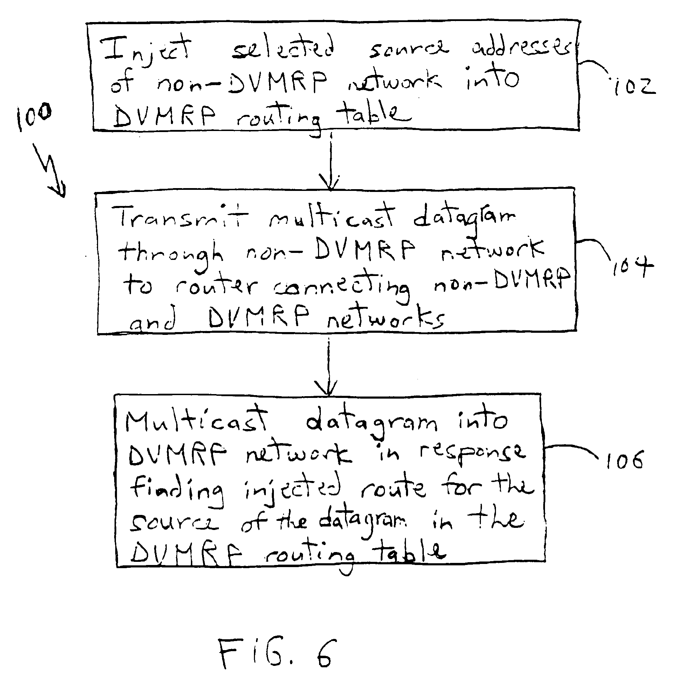

Referring to FIG. 5, a portion of a network 10' in which a multicast router 1' connects a DVMRP network cloud 90 to a non-DVMRP network cloud 92 with a different multicast routing protocol is shown. For example, the non-DVMRP network could 92 may support the protocol independent multicast (PIM) routing protocol. The router 1' transmits multicast datagrams received from the networks B', C' via interface 96 to the DVMRP network cloud 90 via interface 97. The router 1' has a data storage device 12' for storing data in machine readable form, e.g., the device 12 may include a ROM, a RAM, a magnetic disk, or an optical disk. The data storage device 12' stores a DVMRP multicast routing table 16', a multicast routing table 16" for routes in the non-DVMRP network cloud 92, a unicast routing table (URT) 14', and an executable program of policy rules 18'. The DVMRP network cloud 90 includes DVMRP routers 98, 99, which are DVMRP neighbors of the router 1'.

Referring to FIG. 6, a process 100 for transmitting multicast datagrams from the non-DVMRP network cloud 92 into the DVMRP network cloud 90 is shown. An operator injects 102 multicast routes for selected source network addresses of the non-DVMRP network cloud 92 into the DVMRP multicast routing table 16' through the process 70 of FIG. 4. The operator may inject routes from either or both of the other routing tables 14', 16" of the router 1' connecting the non-DVMRP and the DVMRP network clouds 90, 92.

A source network B' transmits 104 a multicast datagram through the non-DVMRP network cloud 92 to the multicast router 1' connecting the non-DVMRP and the DVMRP network clouds 90, 92. The DVMRP router 1' multicasts 106 the multicast datagram through to its neighboring DVMRP routers 98, 99 in response to finding an injected route for the source network B' in its DVMRP multicast routing table 16'.

Messages reporting updates to the DVMRP multicast routing table 16' propagate the injected routes into the DVMRP multicast routing tables of the DVMRP routers 98, 99. Thus, the DVMRP routers 98, 99 of the DVMRP network cloud 90 can multicast the multicast datagrams from the non-DVMRP network cloud 92 through the DVMRP network cloud 90.

While the invention has been described in conjunction with the detailed description, the foregoing description is intended to illustrate and not to limit the scope of the invention. The scope of the invention is defined by the appended claims. Other aspects, advantages, and modifications are within the scope of the claims.

Other embodiments are within the scope of the following claims.

## Claims

1. A method of transmitting multicast datagrams, comprising:
determining whether a router has a route to a selected address; and
injecting a route entry for the selected address in a multicast routing table of the router in response to determining that the router has a route to the selected address.

2. A method of transmitting multicast datagrams, comprising:
searching for a route entry for a source network in a first routing table of a multicast router;
returning a signal for a match in response to finding a route entry for the source network in the first routing table; and
injecting a route entry for the source network in a multicast routing table of the multicast router in response to a signal for a match.

3. The method of claim 2, further comprising:
transmitting a message reporting the injected route entry to a second multicast router.

4. The method of claim 3, wherein the message reports a multicast route injected into the multicast routing table from a unicast routing table.

5. The method of claim 3, further comprising:
updating a multicast routing table of the second multicast router with a new route entry that uses the injected route entry.

6. The method of claim 2, wherein the multicast routing table supports DVMRP.

7. The method of claim 2, wherein the first routing table is a non-DVMRP multicast routing table.

8. The method of claim 2, wherein searching includes selecting a route entry of the first routing table using programmable policy rules.

9. The method of claim 8, wherein selecting further includes processing route entries of the first routing table with a bit mask to find a route entry for the source network.

10. The method of claim 1, wherein the multicast route entry includes an interface address for the unicast route.

11. A network, comprising:
a plurality of multicast routers connected to transmit multicast datagrams according to a first routing protocol; and
a routing device connected to one of the multicast routers via an interface for a second routing protocol, the one of the multicast routers configured to multicast datagrams received from the routing device to the other multicast routers.

12. The network of claim 11, wherein the first routing protocol is a distance vector routing protocol.

13. The network of claim 12, wherein the one of the multicast routers has a multicast routing table with an entry for a route through the interface.

14. An apparatus, comprising:
a multicast router having a routing table for routing multicast datagrams according to a multicast routing protocol, the multicast routing table having an entry for a route through a routing device communicating with the multicast router via a second and different routing protocol.

15. The apparatus of claim 14, the multicast router further comprising:
a second routing table; and
wherein the multicast router is configured to inject a portion of the routes from the second routing table into the multicast routing table.

16. The apparatus of claim 15, wherein the second routing table is a unicast routing table.

17. The apparatus of claim 15, wherein the second routing table supports routing according to a multicast routing protocol that is different than the first routing protocol.

18. The apparatus of claim 15, wherein the multicast router further comprises:
a data storage device encoding an executable program of policy rules capable of injecting routes from the second routing table into the multicast routing table.

19. A computer program product enabling an operator to configure a router to transmit multicast datagrams, the program residing on a computer readable medium and comprising executable instructions to cause a processor to:
search for a route entry for a source network in a first routing table of a multicast router;
return a signal for a match in response to finding a route entry for the source network in the first routing table; and
inject a route entry for the source network in a multicast routing table of the multicast router in response to the signal for a match.

20. A multicast router, comprising:
first and second interfaces adapted to support different routing protocols; and
means for searching for a route entry for a source network in a first routing table and injecting a route entry for the source network in a multicast routing table of the same router in response to finding an entry for the source network in the first table.
